(19) **Europäisches Patentamt / European Patent Office / Office européen des brevets**

(11) **EP 4 625 331 A1**

(12) **EUROPEAN PATENT APPLICATION**

(43) Date of publication:
**01.10.2025 Bulletin 2025/40**

(51) International Patent Classification (IPC):
***G06T 11/60*** *(2006.01)*

(21) Application number: **24166682.5**

(52) Cooperative Patent Classification (CPC):
**G06T 11/60; G06V 20/20**

(22) Date of filing: **27.03.2024**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **British Telecommunications public limited company**
**London E1 8EE (GB)**

(72) Inventor: **The designation of the inventor has not yet been filed**

(74) Representative: **British Telecommunications public limited company**
**Intellectual Property Department**
**9th Floor**
**One Braham**
**Braham Street**
**London E1 8EE (GB)**

(54) **SELECTING OVERLAY GRAPHIC PLACEMENT LOCATIONS**

(57) A computer-implemented method of selecting an overlay graphic placement location for display of an overlay graphic on a display device over an image sequence originating from a camera, the method comprising:

obtaining overlay graphic data;

obtaining object data indicating proximity of any objects in the image sequence to the camera at the time the image sequence was recorded;

initiating a process to determine a placement score, based on the overlay graphic data and the object data, for each of a plurality of candidate graphic locations, the placement scores being determined in dependence on proximity data derived from the object data; and

selecting the overlay graphic placement location in dependence on the placement scores.

100

s110: obtain image sequence

s120: select overlay graphic placement location

s130: overlay graphic to produce processed image sequence

s140: render processed image sequence for display

s150: cause processed image sequence to be displayed on display device

**FIG. 1**

EP 4 625 331 A1

**Description**

**FIELD**

The present disclosure relates to applying overlay graphics to image sequences.

More specifically, aspects relate to computer-implemented methods of selecting overlay graphic placement locations, data processing systems configured to perform such methods, computer programs comprising instructions which, when executed by a computer, cause the computer to carry out such methods, computer-readable data carriers having such programs stored thereon, and data carrier signals carrying such computer programs.

**BACKGROUND**

Overlay graphics are often applied to image sequences such as video streams to provide viewers with additional information or otherwise enhance their viewing experience. For example, television broadcasts of sporting events can include overlay graphics in fixed locations indicating current score, temporary overlay graphics indicating player statistics, and moving overlay graphics (e.g. indicating a player's name) tracking a moving object. As another example, online social media streams and videocalls can include live viewer reactions as overlay graphics. Augmented reality applications also add overlay graphics, for example to indicate useful information about an object the viewer is looking at, e.g. temperatures recorded at different locations on a workpiece being manipulated by a robot arm. As yet another example, drone pilots can be provided with useful data such as altitude and drone power level in the form of overlay graphics.

Placement of overlay graphics is typically either static, i.e. determined in advance, or performed manually by a graphics director. The former approach risks occluding important information in the image sequence, while the latter approach is time-consuming and therefore requires a delay to be introduced between recording of an image sequence and its 'live' broadcast.

What is needed is improved methods of selecting overlay graphic placement locations.

**SUMMARY**

According to a first aspect, there is provided a computer-implemented method of selecting an overlay graphic placement location for display of an overlay graphic on a display device over an image sequence originating from a camera, the method comprising:

  obtaining overlay graphic data;
  obtaining object data indicating proximity of any objects in the image sequence to the camera at the time the image sequence was recorded;
  initiating a process to determine a placement score, based on the overlay graphic data and the object data, for each of a plurality of candidate graphic locations, the placement scores being determined in dependence on proximity data derived from the object data; and
  selecting the overlay graphic placement location in dependence on the placement scores.

The computer-implemented method can further comprise obtaining the image sequence.

A computer-implemented method of overlaying an overlay graphic on an image sequence of one or more images can comprise performing the method of selecting an overlay graphic placement location for display on a display device, then rendering a processed image sequence for display, that processed image sequence being based on the aforementioned image sequence, with the overlay graphic overlaid thereon in the selected location.

The computer-implemented method can further comprise causing the processed image sequence to be displayed on a display device.

Obtaining the object data can comprise:

  causing transmission of a signal into the camera's field of view;
  detecting any reflections of that signal; and
  calculating proximity of any objects in the camera's field of view from respective time intervals between said transmission and each reflection.

Obtaining the object data can comprise:

  obtaining a proximity detector output stream during recording of the image sequence by the camera from a proximity detector trained on the camera's field of view; and

sampling that output stream at a predetermined rate.

Obtaining the object data can comprise:

obtaining the image sequence; and
performing object detection and proximity estimation based on the image sequence.

The computer-implemented method can further comprise:

obtaining data indicating relative expected placement scores of a plurality of the candidate graphic locations; and
determining a trial order for the plurality of candidate graphic locations in dependence thereon, such that the process to determine the placement scores proceeds from candidate graphic locations expected to have relatively high placement scores to candidate graphic locations expected to have relatively low placement scores;

wherein the process is terminated when a placement score above a predetermined stopping threshold value is found.
The computer-implemented method can further comprise, in advance of the process to determine the placement scores:

generating a substantially random selection of the placement scores;
calculating a baseline value in dependence on that selection of placement scores; and
determining the stopping threshold value in dependence on that baseline value.

The overlay graphic data can comprise an indication of the overlay graphic's outline. The object data can comprise a matrix representation of the image sequence. The placement score for each candidate graphic location can be based on an average of the matrix elements which would be contained within the overlay graphic's outline if the overlay graphic were overlaid on the matrix representation of the image sequence in the respective candidate graphic location.
The object data can comprise an $m \times n$ matrix representation of the image sequence; and

the overlay graphic data can comprise a $q \times r$ matrix representation of the overlay graphic, wherein $q \leq m$, $r \leq n$, and $q.r < m.n$;
wherein the process to determine the placement scores can be a process to convolve the matrix representation of the image sequence with the matrix representation of the overlay graphic .

The process to convolve the $m \times n$ matrix representation of the image sequence, 'A', with the $q \times r$ matrix representation of the overlay graphic, 'B', comprises generating an $(m-q+1) \times (n-r+1)$ matrix, 'C', whose elements are the element-wise inner products (also known as the 'Frobenius' inner products) of each $q \times r$ portion of A with B, such that the $(i, j)$ entry of C is the element-wise inner product of A[$i : q+i$-1, $j$:r+$j$-1] and B.
The process to convolve the matrix representation of the image sequence with the matrix representation of the overlay graphic can comprise, for each of a plurality of candidate positions in which the matrix representation of the overlay graphic can be overlaid on the matrix representation of the image sequence:

generating an $m \times n$ mask matrix comprising the matrix representation of the overlay graphic in said position and null elements elsewhere;
splitting the matrix representation of the image sequence into a plurality of image sub-matrices;
splitting the $m \times n$ mask matrix into a corresponding plurality of mask sub-matrices, each mask sub-matrix being of identical dimension and position within the $m \times n$ matrix it is split from to its corresponding image sub-matrix; and
calculating an element-wise inner product of each of the image sub-matrices with its corresponding mask sub-matrix, wherein at least two of those element-wise inner products are calculated at least partly contemporaneously.

The element-wise inner products can be calculated by two or more parallel processors.
Obtaining the object data can comprise generating the object data in dependence on overlay graphic placement location preference data.
The computer-implemented method can further comprise:

obtaining user eye-tracking data; and
selecting the overlay graphic placement location in dependence thereon.

The object data can be generated in dependence on the user eye-tracking data. When a trial order for the plurality of candidate graphic locations is defined, that trial order can be determined in dependence on the user eye-tracking data.

Obtaining the object data can comprise:

obtaining one or more matrix representations of the image sequence;
performing object detection on each of those matrix representations; then
weighting matrix elements at locations corresponding to detected object locations in dependence on respective detected object types.

Obtaining the object data can comprise performing compression based on one or more images of the image sequence.

Obtaining the object data can comprise:

obtaining the image sequence; then
compressing one or more images of the image sequence to produce a lower resolution image sequence; then
performing object detection on that lower resolution image sequence.

If each image of the image sequence referred to above has a resolution of $o \times p$ pixels, then each image of the lower resolution image sequence can have a resolution of $m \times n$, where $m.n < o.p.$

The computer-implemented method can further comprise:

predicting subsequent object data in dependence on initial object data obtained in respect of a time period represented by the image sequence;
wherein the process to determine the placement scores is based on object data obtained in dependence on both the initial object data and the subsequent object data.

Obtaining the initial object data can comprise performing object detection to detect one or more objects; and predicting the subsequent object data can comprise using a statistical model to predict one or more future positions of each of those one or more objects.

The statistical model can be a regression model which predicts the future positions based solely on the initial object data. For example, a linear regression model, or a multivariate regression model could be used. Alternatively, the statistical model can be a pre-trained machine learning (ML) model. For example, an ML regression model, or a neural network could be used.

The initial object data can comprise an initial snapshot sequence in respect of a time period represented by the image sequence; and predicting the subsequent object data can comprise predicting a subsequent snapshot sequence of one or more subsequent snapshots in respect of a subsequent time period.

The snapshots can be image frames, such that the initial snapshot sequence can be the image sequence, or a downsampled version thereof. Alternatively, the initial snapshot sequence can be based on output data from a proximity detector trained on a field of view represented in the image sequence.

The subsequent snapshot sequence can be predicted using a trained computer vision model. For example, a deep residual network, a recurrent neural network such as a long short-term memory (LSTM) network, an encoder-decoder neural network, or a generative adversarial network (GAN) could be used.

The image sequence can be a sequence of a plurality of images and obtaining the object data can comprise:

obtaining a sequence of $m \times n$ matrices, each respectively representing a corresponding one of the sequence of the plurality of images; and
generating an $m \times n$ matrix representation of the image sequence by, for each matrix element, calculating a value representing a degree of variation in corresponding matrix elements over the sequence of $m \times n$ matrices.

The value representing the degree of variation can be based on a range or a variance.

Obtaining the object data can comprise:

obtaining a matrix representation of the image sequence;
determining a proportion of null-valued matrix elements in that matrix representation of the image sequence; and
when that proportion exceeds a threshold proportion, storing the matrix representation of the image sequence and a matrix representation of the overlay graphic as sparse matrices;
otherwise storing the matrix representation of the image sequence and the matrix representation of the overlay graphic as full matrices.

Obtaining the object data can comprise:

obtaining a matrix snapshot representation of each of a sequence of two or more snapshots, each snapshot representing a different moment of the image sequence; and
performing a summation of all of those matrix snapshot representations.

The process to determine the placement scores can be based on a smoothed version of the object data.
The smoothing can be performed using one or more of: rectangular bounding boxes, a Gaussian blur filter, a mean blur filter, and a weighted average blur filter.
The smoothing can be performed on the summation of all of the matrix snapshot representations.
Obtaining the object data can comprise:

obtaining a plurality of matrix image representations of the image sequence, each such matrix image representation relating to a different point in time; and
performing a weighted summation of all of those matrix image representations, wherein a weight is assigned to each of the matrix image representations in dependence on proximity data related thereto.

The overlay graphic can be configured for application to a live video feed.
Obtaining the object data can comprise obtaining the image sequence from one or more cameras moving in synchrony with or trained on a mobile apparatus; and the overlay graphic can be configured for display to a user during that user's control of the mobile apparatus.
The mobile apparatus can be a vehicle and/or a robot, for example a drone.
According to a second aspect, there is provided a data processing system configured to perform the method of the first aspect.
According to a third aspect, there is provided a computer program comprising instructions which, when the program is executed by a computer, cause the computer to carry out the method of the first aspect.
According to a fourth aspect, there is provided a computer-readable data carrier having stored thereon the computer program of the third aspect.
According to a fifth aspect, there is provided a data carrier signal carrying the computer program of the third aspect.

## BRIEF DESCRIPTION OF THE FIGURES

Aspects of the present disclosure will now be described by way of example with reference to the accompanying figures. In the figures:

Figure 1 illustrates an example process in which the methods described herein can be used;
Figure 2 illustrates an example proximity image;
Figure 3 illustrates an example aggregation operation;
Figure 4 illustrates an example smoothing operation;
Figure 5A illustrates an example 'Western reading' trial order;
Figure 5B illustrates an example 'outside-in' trial order;
Figure 6 illustrates an example placement score calculation method;
Figure 7 illustrates a first step in an example convolution process;
Figure 8 illustrates an example parallel processing approach to calculating a convolution entry;
Figure 9 illustrates an example single point prediction approach;
Figure 10 illustrates an example boundary point prediction approach;
Figure 11 illustrates an example overlay graphic placement location selection process;
Figure 12 illustrates an example matrix storage process
Figure 13 illustrates an example parallel processing approach to calculating a convolution entry;
Figure 14 illustrates an example process to obtain object data;
Figure 15 illustrates an alternative example process to obtain object data;
Figure 16 illustrates an example overlay graphic placement location selection process;
Figure 17 illustrates an alternative example overlay graphic placement location selection process;
Figure 18 illustrates an example process to obtain preference and/or relative expected placement score data; and
Figure 19 schematically illustrates an example data processing system.

## DETAILED DESCRIPTION

Described below are various methods for selecting an overlay graphic placement location for display of an overlay graphic on a display device over an image sequence of one or more images. (The term 'image sequence', as used herein, covers both a plurality of images in a particular order, and a single image.) The graphic can be overlaid on the image sequence for display on any suitable display device, for example a television, monitor, portable device screen, augmented reality (AR) glasses/goggles etc. Such overlay graphics can for example comprise text and/or pictures and/or other graphic elements.

The methods described herein can for example be used to apply overlay graphics to pre-generated media (e.g. pre-recorded video, and/or animation sequences), to 'live' video feeds (which are intended to be viewed 'in real time', i.e. as quickly as possible after generation, typically with a delay of less than a minute), and to mixed feeds which incorporate both live and pre-generated elements. The image sequence can for example be partly or fully recorded using one or more cameras, and/or partly or fully generated via manual and/or automatic animation.

The image sequence can for example be obtained by sampling a video clip at a predetermined rate. The lower the sampling rate the lower the resource requirements (memory, time, power etc.) for subsequent storage and processing, but if the sampling rate is lower than the frame rate of the video then some information may be lost, so a suitable compromise must be made for each implementation.

The methods described herein can for example be used for overlay graphic placement to assist the operator of a mobile apparatus such as a vehicle or robot, e.g. a drone or robotic arm, during their control of the apparatus. ('Mobile' as used herein may refer to motion of the entire apparatus, and/or one or more parts of the apparatus, whether translational and/or rotational and/or otherwise.) In this case at least part of the image sequence can originate from one or more cameras mounted on, carried by, or otherwise moving in synchronism with the mobile apparatus for at least some of the time the image sequence is being recorded. Alternatively, at least part of the image sequence can originate from one or more cameras intended for viewing the mobile apparatus (and thus trained on it), though the apparatus may not actually be visible in the (entirety of the) image sequence, e.g. due to an intervening object, or unexpected relative motion of the camera and the apparatus.

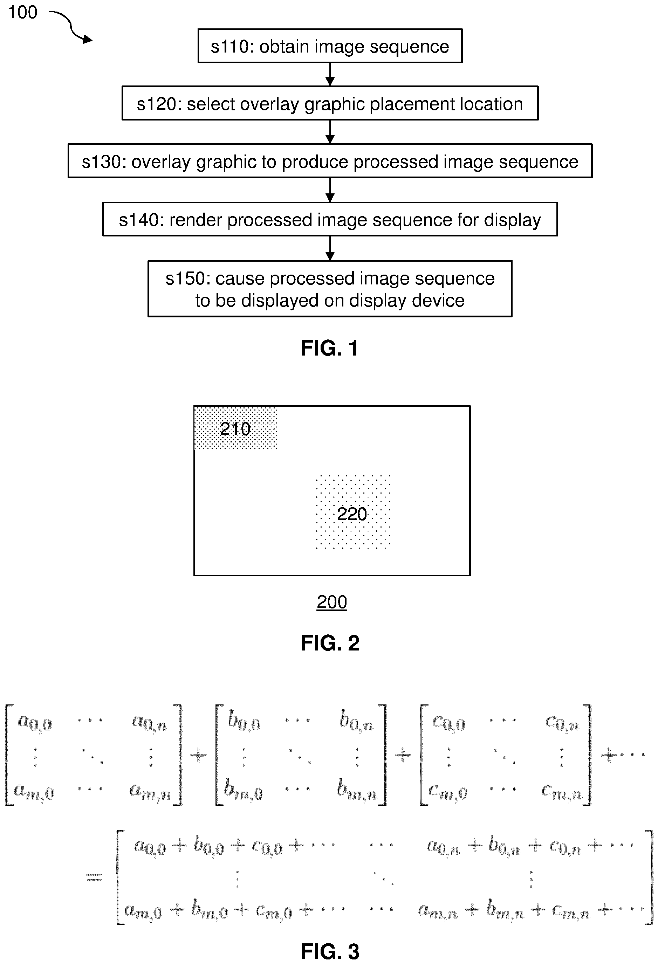

Figure 1 is a flowchart illustrating an example process in which the methods described herein can generally be used. It depicts a computer-implemented method 100 of overlaying an overlay graphic on an image sequence of one or more images. At step s110 the image sequence is obtained, for example by recording it using one or more cameras, or receiving/retrieving it from one or more data processing devices. At step s120, an overlay graphic placement location is selected, for example in one of the ways described below. The graphic is overlaid on the image sequence at step s130 to produce a processed image sequence, which is then rendered for display at step s140. The processed image sequence is then caused to be displayed on a display device at step s150.

Selection of the overlay graphic placement location can be performed in a variety of ways. For example, placement scores can be determined in dependence on overlay graphic data and object data for each of a plurality of candidate graphic locations. This enables the overlay graphic placement location to be selected based on those scores so as to avoid occluding significant objects and/or to make use of pixels showing only insignificant objects. The object data could for example be the image data itself, the output of an object detection process performed on the images, or could be sensor data (e.g. proximity sensor data as will be described below) recorded contemporaneously with the images.

Object detection can for example be performed using a machine learning (ML) approach such as YOLO (You Only Look Once), or a CNN (convolutional neural network), whether traditional CNN, region-based R-CNN or Faster R-CNN. Training of a suitable machine learning model could for example use generic video object detection datasets such as ImageNet Vid, or YT-BB (YouTube-BoundingBoxes), or domain-specific datasets such as Waymo Open Dataset for semi-autonomous driving. Object detection can be based on the image stream itself, taking pixel data as input. Alternatively or additionally, object detection can make use of one or more other data sources. For example, proximity sensors can be used as will be described in more detail below. As another example, heat (e.g. infrared, IR) sensors could be used, e.g. if objects with temperatures in suitable ranges (such as human or animal bodies) are most pertinent to the overlay graphic placement location selection.

Some or all of the data used to determine where to place the overlay graphic can be in the form of one or more matrices. For example, a matrix representation of the image sequence and/or one or more moments within it can be obtained. Each image of the sequence can for example be stored as a matrix of pixel values of dimension equal to the resolution of the image. Alternative or additional matrix representations of the image sequence can consist of sensor data formatted into matrices. For example, a proximity sensor trained on the same field of view as a camera recording the image sequence could output a matrix of proximity values.

Image and/or sensor data can be processed to produce further matrix representations of the image sequence, for example an object detection algorithm could output a matrix of values indicating the presence/absence and/or type and/or other property of objects identified in the image sequence. In some implementations, a matrix representation of the image sequence could be generated by performing object detection, and then weighting matrix elements at locations corresponding to detected object locations in dependence on respective detected object types, e.g. with the weightings selected to correspond to salience of the respective object types. This enables the overlay graphic placement location to be selected to avoid occluding particularly important objects, while allowing occlusion of less important objects in crowded image sequences where there may be insufficient object-free space to host the overlay graphic. In this way, obtaining the object data can comprise generating the object data in dependence on overlay graphic placement location preference data. Such overlay graphic placement location preference data can for example be generated based on trial viewer eye-tracking data, wherein objects or object types can be considered more or less important depending on the level of attention trial viewers give to them.

In some implementations which use matrices, a large proportion of matrix element values are likely to be null. For example, a matrix representing significant objects detected in an image of a football match, where only players, the ball, and the goal are considered significant, is likely to have many null elements for parts of the image showing only the pitch. In cases like this, the matrix can be stored as a sparse matrix, where only the non-zero matrix elements are explicitly recorded (together with their indices), instead of in a conventional/full format (i.e., element by element, optionally with some compression applied). This reduces resources (memory, time, power, etc.) required to store and process the matrix. For example, consider a $1000 \times 1000$ matrix with 10 non-zero elements in the first row, all other elements being zero. Standard matrix implementations store every matrix element separately, so would store 1,000,000 entries in memory. A sparse matrix however would only store the 10 non-zero entries in conjunction with their indices, e.g., (1, 1) = 10, (1, 2) = 5, ..., (1, 10) = 7. The latter format is clearly much more memory efficient for this example matrix. Furthermore, subsequent processing of the matrix can then be performed using sparse implementations of matrix operations which are designed specifically for sparse matrices and are therefore more efficient.

As is evident from the example above however, sparse matrix representations are in fact less memory efficient than full matrix representations when the matrices in question do not have a high proportion of null elements. Therefore a threshold proportion of null elements can be used to determine whether to use sparse or full matrix representations. This can be predetermined, e.g. set at 90%, or determined on the basis of whether sparse representations are (likely to be) more efficient or not for a particular set of matrices.

Another way to reduce resource requirements (memory, time, power etc.) of the methods described herein is to compress the image sequence prior to determining the placement scores. For example, one or more images of the image sequence can be compressed prior to performing any object detection. E.g., if each image of the image sequence has a resolution of $o \times p$ pixels, then each image of a lower resolution (compressed) image sequence has a resolution of $m \times n$, where $m.n < o.p$.

As noted above, in some examples object data used to determine the placement scores can comprise data indicating proximity of any objects in the image sequence to a camera recording the image sequence. This is particularly beneficial where the image sequence is a live camera feed from a mobile apparatus such as a drone or other remotely operated vehicle or robot, intended to enable an operator/pilot to steer or otherwise control movement of the apparatus. In this case the overlay graphic can safely occlude distant objects, but if it prevents the operator from seeing something nearby then this can increase the risk of unintentional collisions. If both object detection data and proximity data are used, then they can be combined into a single representation of the image sequence. For example, an object detection matrix can be multiplied with a proximity detection matrix to produce a matrix representation of the image sequence.

Proximity data can for example originate from a reflective proximity sensor system which transmits a signal into the camera's field of view, detects any reflections of that signal, and calculates distance to any objects in the camera's field of view from the reflection delays. Examples of such sensor systems include light detection and ranging (LIDAR), and sound navigation and ranging (SONAR) systems. For example, one 'snapshot' sample recorded by such a sensor system might be as follows:

```
[
        {"id": 0, "pixel_range": [[0, 20], [0, 10]], "proximity": 0.1},
        {"id": 1, "pixel_range": [[30, 50], [20, 40]], "proximity": 0.5}
]
```

which can be represented graphically by the example proximity image 200 shown in Figure 2, where the proximity 0.1 region is indicated at 210 and the proximity 0.5 region is indicated at 220. In this example the proximity is distance from the sensor measured on a scale from 0 to 1, such that 0 represents an effectively immediate reflection (i.e. an object touching the sensor so that its reflection is received without any measurable delay) and 1 is so far away that no reflection is detected. Other scales can be used, and/or the scale direction can be flipped such that a proximity value of 0 corresponds to no reflection being received. Any proximity detector output streams can be sampled at any desired rate permitted by the detector system. For example, sampling at the image sequence frame rate can simplify subsequent processing, while sampling only once per image sequence reduces memory requirements.

Alternatively or additionally to measuring proximity data, it can be inferred from image data. For example, object detection can be performed on the image sequence and the proximity of each object can be estimated from its size in the image frame in which it appears. This can be based on a detected object type; e.g. a football can be assumed to have a diameter of 22cm, therefore its diameter in pixels can be used to estimate its distance from the camera. Alternatively or additionally, this can be based on its size relative to reference objects of known size and distance from the camera, such as a goalpost.

Whether object data is obtained from the image sequence itself, from additional sensors or from a combination thereof, it can be aggregated over the time period covered by the image sequence to produce a single representation of the image sequence on which the overlay graphic placement location selection can be based. For example, a sequence of snapshot matrices, each representing a different moment of the image sequence, can be summed element-wise to produce a matrix representation of the image sequence as illustrated in Figure 3. This enables placement of the overlay graphic in a location which is suitable for the duration of the image sequence, avoiding the overlay graphic jumping around mid-sequence in a manner which may reduce its utility to, and/or irritate the viewer. It also reduces the resources (memory, time, power etc.) required for the process to determine the placement scores.

Where such a summation is performed, it can optionally be a weighted sum. In this way, obtaining the object data can comprise generating the object data in dependence on overlay graphic placement location preference data. For example, different weightings can be accorded to different snapshot matrices in dependence on objects detected within them, e.g. certain types of objects or particular objects may be considered more important than others, and/or snapshots with fewer objects may be considered more important than snapshots with more objects, or vice-versa, depending on the subject matter of the image sequence. Alternatively or additionally, weightings can be accorded in dependence on proximity, e.g. proximity of a particular object, the closest proximity in the snapshot, or the average proximity of objects identified in the snapshot. The position of each snapshot in the sequence can alternatively or additionally be used to determine its weight, e.g. earlier snapshots may be weighted more heavily than later snapshots, or vice-versa. In this way, obtaining the object data can comprise generating the object data in dependence on overlay graphic placement location preference data. Such overlay graphic placement location preference data can for example be generated based on trial viewer eye-tracking data, wherein particular characteristics of snapshot matrices and/or of objects identified within them can be considered more or less important depending on the level of attention trial viewers give to them.

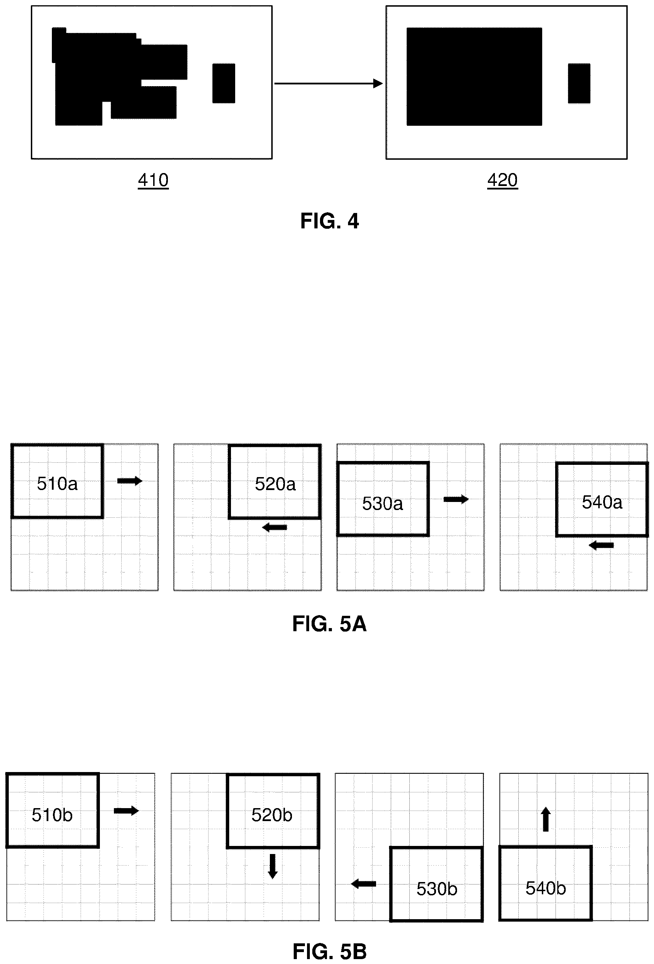

The process to determine the placement scores can be based on a smoothed version of the object data. This avoids the overlay graphic being placed in a tight gap between objects. If aggregation is performed, then performing the smoothing after aggregation is more efficient in terms of the resources required (memory, time, power etc.). The smoothing can for example be performed using one or more of: rectangular bounding boxes, a Gaussian blur filter, a mean blur filter, and a weighted average blur filter. Figure 4 illustrates a binary matrix representation of an image sequence pre-smoothing at 410, where black represents a matrix element of 1 (indicating an object has been detected in a corresponding location in the image sequence) and white represents a matrix element of zero (indicating no object has been detected in a corresponding location in the image sequence). The result of smoothing the matrix representation 410 using rectangular bounding boxes is shown at 420. Smoothing binary matrices using rectangular bounding boxes in this way enables them to be stored in a more memory efficient manner, since only the locations of the corners of the bounding boxes need to be recorded.

Determining placement scores for every possible overlay graphic placement location can in some cases be a resource-intensive process, requiring significant power and memory and taking longer than may be acceptable for some implementations, for example where the overlay is to be applied to a live video feed, especially if that live video feed is for use by a mobile device operator as described above. Therefore, instead of requiring every candidate graphic location to be trialled in order to find the best possible overlay graphic placement location, the process to determine the placement scores can be terminated at a predetermined maximum process time or after a predetermined maximum number of placement scores have been generated. The overlay graphic location corresponding to the best placement score generated up to that point can then be selected. Alternatively or additionally, the process can be terminated as soon as a placement score meeting a predetermined stopping threshold criterion is found; i.e. when a 'good enough' solution has been identified. For example, candidate graphic locations can be trialled in the 'Western reading' order illustrated by Figure 5A, starting at the top left corner 510a, moving element-by-element to the top right corner 520a, then returning to the left hand side but shifted down by one element 530a, proceeding element-by-element to the right hand side 540a then repeating the shift down and movement left to right until the bottom right hand corner is reached. (This is the trial order typically used for performing matrix convolutions, as will be discussed below.) However, if a placement score exceeding a predetermined stopping threshold (or lower than the threshold, depending on the scoring scheme) is found at location 520a the process can be stopped early with no need to trial candidate graphic locations 530a to 540a, or any subsequent locations in the trial sequence.

The trial order can be determined based on overlay graphic placement location preference data. This can be according to manually selected preferences, for example viewer preference and/or image stream producer preference (e.g. to conform to a 'house style'), or can be determined empirically. An empirical determination could for example involve trial viewer eye tracking to establish, in advance of displaying the image sequence with the overlay graphic applied, where viewer attention is likely to be focussed. The trial order can then be determined either to increase or decrease the likelihood of the overlay graphic being located in a region of heavy viewer attention, depending on whether the overlay graphic is intended to be prominent to the viewer throughout their viewing of the image sequence, or to provide ancillary information the viewer can glance at when required. If the overlay graphic is not being applied to the image sequence 'live' then eye tracking data can be collected for one or more trial viewers watching the image sequence absent the graphic overlay. If the overlay graphic is being applied 'live' then a similar image sequence can be used in an advance trial to collect eye tracking data, from the intended viewer or one or more trial viewers.

Benefits of the early stopping technique described above can be maximised by choosing the trial order so that candidate graphic placement locations expected to score well are trialled first. For example, the 'Western reading' order of Figure 5A may be suitable if important objects are expected to be located towards the bottom of the images in the image sequence, as may e.g. be the case in a drone video feed. As another example, if important objects are expected to be centred in the image sequence, the 'outside-in' trial order illustrated by Figure 5B can be used. This sequence starts in the top left corner 510b and moves element-by-element to the top right corner 520b as in Figure 5A, but then proceeds element-by-element down the right hand side to the bottom right corner 530b, then across the bottom to the bottom left corner 540b before heading element-by-element towards the top left corner. Once all the edge positions have been trialled the sequence spirals inwards, proceeding clockwise from the top left around positions which exclude the outermost elements, then positions which exclude the two outermost elements and so on. Eye tracking data can be used as described above to establish where important objects are likely to be located.

The stopping threshold can be determined in advance according to an overlay graphic placement standard considered generally acceptable. Alternatively, the stopping threshold can be determined specifically for each image sequence based on a baseline placement score value calculated for a random set of placement scores generated in advance of the main process. For example, the baseline value could be the mean of a random selection of 5% of the placement scores, and the stopping threshold value could be the midpoint between the baseline value and the highest possible value (or lowest possible value, depending on the scoring scheme). Alternatively, the baseline could be the lowest of the random set of placement scores, and the stopping threshold value could be that baseline value.

Using the early stopping approach described above, in the best case scenario we identify a suitable position for the graphic in the video in the first element-wise product, which would require $2 \times q \times r$ - 1 operations, for a graphic of size (q, r). In the worst case scenario we would find a suitable position in the same time as a regular convolution, requiring $(m - q + 1)(n - r + 1)(2 \times q \times r - 1)$ operations for a graphic of size $(q, r)$ and a video of size $(m, n)$. We expect our procedure to

$$\frac{1}{4}(m - q + 1)(n - r + 1)(2 \times q \times r - 1)$$

require around                                                                                              operations (i.e. 25% of the worst case scenario), although this can be substantially reduced with a well-chosen trial order. For example, for a $3840 \times 2160$ video (in 4k) and a $450 \times 300$ graphic, we expect to find a suitable position in -426 billion operations, compared with ~1.7 trillion operations needed for a regular convolution procedure. However, it could require only a few million operations in this case if the preferences are optimised - the minimum required is 270,000.

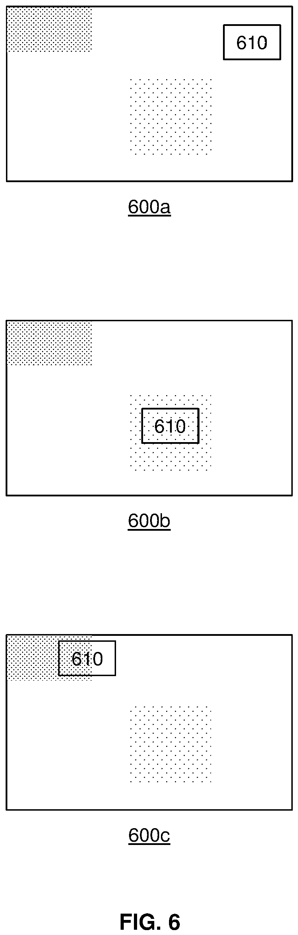

Placement scores can be calculated in a variety of ways. According to one example, where the overlay graphic data comprises an indication of the overlay graphic's outline and the object data comprises a matrix representation of the image sequence, the placement score for each candidate graphic location can be based on an average of the matrix elements which would be contained within the overlay graphic's outline if the overlay graphic were overlaid on the matrix representation of the image sequence in the respective candidate graphic location. This is illustrated in Figure 6, which shows an overlay graphic outline 610 in three different trial graphic placement locations 600a, 600b, and 600c overlayed on the same illustration of a matrix representation of an image sequence. The trial graphic placement location indicated at 600a overlays only null elements of the matrix (shown in white), thus the placement score for this location is zero. The trial graphic placement location indicated at 600b overlays a region of the matrix which contains only matrix elements with values of 0.5 (shown with a widely spaced dot pattern), thus the placement score for this location is 0.5. Finally, the trial graphic placement location indicated at 600c has half of the overlay graphic outline 610 overlaying matrix elements with values of 0.7 (shown with a more closely spaced dot pattern), and the other half overlaying null matrix elements, thus the placement score for this location is 0.35.

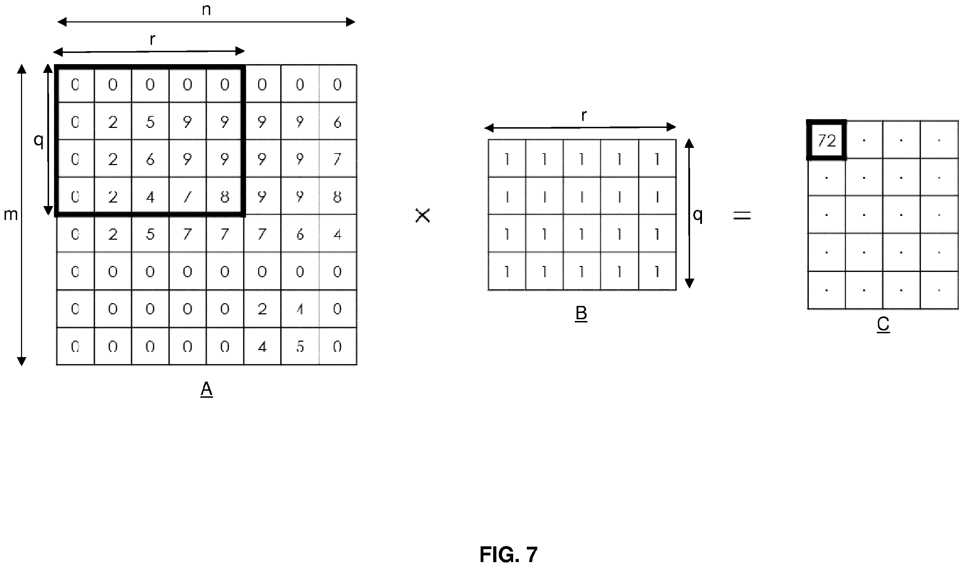

As an alternative to the above method of determining placement scores, where the object data comprises a matrix representation of the image sequence and the overlay graphic data comprises a matrix representation of the overlay graphic, the placement scores can be based on convolution entries generated by convolving those two matrices with one another. Figure 7 illustrates a first step in convolution of an $m \times n$ matrix representation of an image sequence, 'A', with a $q \times r$ matrix representation of an overlay graphic, 'B', to generate an $(m-q+1) \times (n-r+1)$ matrix, 'C', whose elements are the element-wise inner products (also known as the 'Frobenius' inner products) of each $q \times r$ portion of A with B, such that the $(i, j)$ entry of C is the element-wise inner product of A[$i: q+i$-1, $j: r+j$-1] and B. (Only the (1, 1) entry of C is populated in Figure 7.)

The convolution can be performed in full, and the overlay graphic placement location can be selected to correspond to the lowest (or highest, depending on the circumstances) of the convolution entries. Alternatively, the early stopping technique described above can be used, with the convolution process being terminated as soon as a 'good enough' convolution entry is calculated.

The placement scores can simply be the convolution entries, or can be derived therefrom via some additional processing. For example, convolution entries can be rescaled, e.g. to flip the scaling such that a low convolution entry corresponds to a high score. As an alternative or additional example, the convolution entries for particular overlay graphic placement locations can be modified in line with overlay graphic placement location preference data. As described above, this can be according to manually selected preferences, for example viewer preference and/or image stream producer preference (e.g. to conform to a 'house style'), or can be determined empirically. An empirical determination could for example involve trial viewer eye tracking to establish, in advance of displaying the image sequence with the overlay graphic applied, where viewer attention is likely to be focussed.

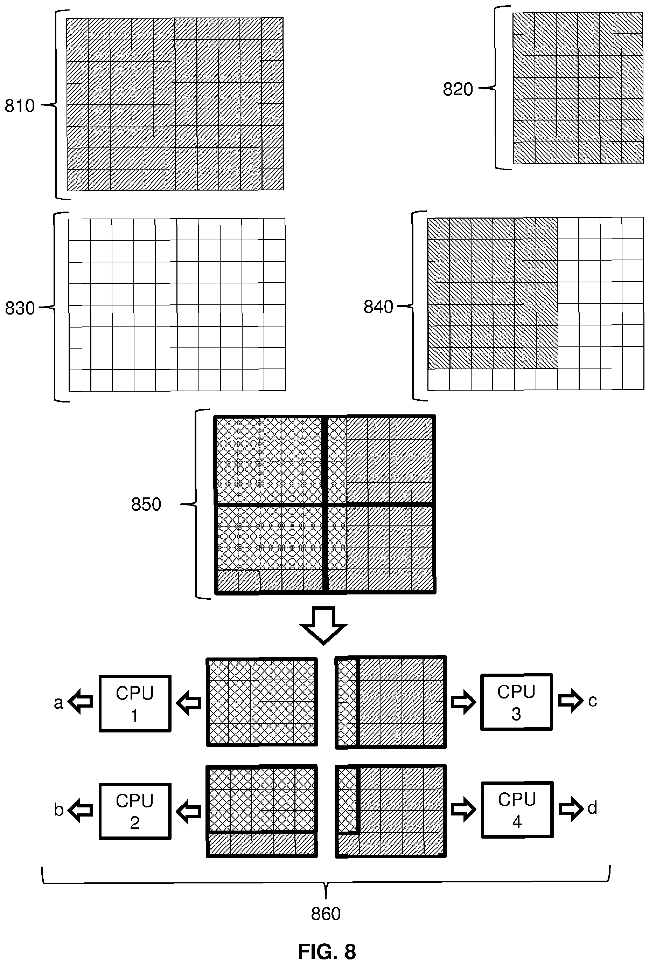

When convolution is used to determine the placement scores, the process can be sped up by making use of parallel processors. Figure 8 illustrates calculating one convolution entry according to this approach. A matrix representation of an image sequence is illustrated at 810 with forwards hatching. A matrix representation of an overlay graphic is illustrated at 820 with backwards hatching. A null matrix having the same dimensions as the image matrix 810 is illustrated at 830. A mask matrix 840 having the same dimensions as the image matrix 810 is generated by adding the graphic matrix 820 to the null matrix 830 in the location the convolution entry is being calculated for. The image matrix 810 is split into a plurality of image sub-matrices and the mask matrix 840 is split into a corresponding plurality of mask sub-matrices. These two sets of sub-matrices are shown overlayed on one another at 850, outlined by thick black lines, to illustrate how they correspond in dimensions and positions. (Cross-hatching indicates where elements originating from the graphic matrix 820 overlap elements from the image matrix 810.) Each pair of sub-matrices is then provided to a respective processor, which calculates their element-wise inner product ($a$, $b$, $c$, and $d$ respectively), as indicated at 860. The convolution entry is then calculated by summing all of those element-wise inner products; i.e., as $a + b + c + d$.

The splits in Figure 8 are 'even'; i.e., the sub-matrices are all of the same dimensions as one another. This need not be the case however, so long as each mask sub-matrix has the same dimensions as its corresponding image sub-matrix. The splits to use can be determined in dependence on the number of parallel processors available to calculate the element-wise inner products. Provided a corresponding number of parallel processors is available for use, the higher the number of sub-matrices, the faster the convolution entry is calculated.

The above methods all work well to select an appropriate location for an overlay graphic on a particular image sequence. If that image sequence is a portion of a longer sequence, e.g. a clip from a longer video stream, then the longer sequence can be split into shorter image sequences and the techniques described herein can be repeated for each image sequence in series. However, this may result in an overlay graphic jumping around the display as each new image sequence starts in a manner which may detract from the viewer experience. This can be detrimental to the viewer's ability to take in the information presented by the image sequence and the overlay graphic, which can result in errors if the viewer is relying on it for a task such as operating a mobile apparatus as described above. To reduce the severity of this effect, an element of prediction can be incorporated into selection of the overlay graphic placement location. That is, initial object data can be obtained in respect of the time period represented by the image sequence, then subsequent object data can be predicted in dependence on the initial object data. The process to determine the placement scores can then be based on both the initial and subsequent object data. Initial and subsequent object data can for example be aggregated by summing matrices. For example, in a football match a player could be running towards somewhere a graphic is currently placed. In the implementations described above the graphic will continue to show until the player reaches where the graphic is placed, then once the player overlaps the graphic it will jump elsewhere (since the player is a detected object and will overlap the graphic, reducing the placement score for that location). However, the player's movement through the video is somewhat predictable and could be modelled, e.g., if the player is running at a constant speed in a straight line, it can be assumed that they will continue to move in this manner. Therefore using the previous frames' data you can predict the future (not yet observed) frames and make graphic placement decisions accordingly.

Prediction can be performed object-by-object. That is, objects can be detected in the image sequence, e.g. in any of the ways described above, to generate the initial object data, then the subsequent object data can be predicted using a statistical model which predicts future positions of each of those objects.

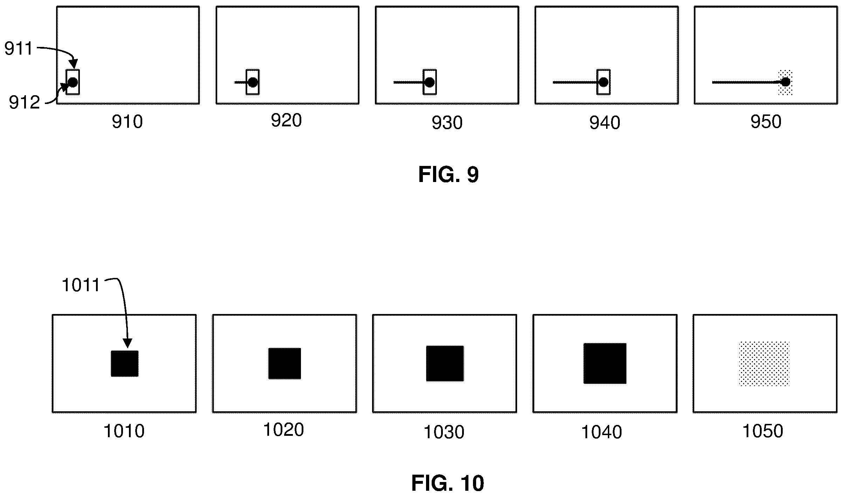

One example approach to object-by-object prediction is to reduce each detected object to a single point, e.g., the centre of the object, top left corner, etc., in each of the images in the image sequence. This results in a sequence points representing the movement of the object. For example, the sequence of points (0, 0), (0, 10), (0, 30), (0, 60) represents an object moving upwards at increasing speed. The coordinates can then be handled separately, e.g., predicting the x-coordinate only from the previous x-coordinates, by training a statistical model, e.g. a linear regression model, to predict the next coordinate (e.g., (0, 100)). This is similar to extrapolating a line/curve of best fit. Alternatively, greater accuracy can be derived from a model that predicts based on both coordinates, e.g. a multivariate regression model. Figure 9 illustrates an example of this single point approach to prediction. A rectangular object 911 is located within an initial image 910. The object 911's central point 912 is shown as a dot. The object 911 moves from left to right across the field of view as the image sequence progresses through images 920, 930, and 940. (The path of the central point 912 is traced with a line to indicate this motion.) A prediction of the object's location in an image to follow image 940 is shown at 950.

Where object data comprises proximity information a three-dimensional approach to prediction can be taken. One example way to do this is to use points on the boundary of the object and make predictions of where those points are moving to. This gives a prediction of how the size of the object on the display is growing over time. This can be achieved by applying segmentation and/or clustering techniques to a proximity matrix so that different proximity regions are grouped together. These can then be treated as separate objects. For example, the matrix can be treated as a binary image and image segmentation techniques can be applied, e.g., thresholding. Alternatively, a K-means clustering algorithm could be applied. Once objects have been identified, their boundary points can be tracked over time. Similar approaches to the point motion prediction techniques described above can be applied to predicting x, y, and z (proximity) coordinates, e.g. using statistical models such as multivariate regression. Figure 10 illustrates an example of this approach to prediction. A rectangular object 1011 is located within an initial image 1010. The object 1011 moves closer to the camera recording the image sequence as the image sequence progresses through images 1020, 1030, and 1040. A prediction of the object's location in an image to follow image 1040 is shown at 1050.

The prediction techniques described above can be applied when only the image sequence data is available. However, if a suitable training data set is available then an ML model can be used for object motion prediction. This could for example be a regression model, or a neural network. Suitable training datasets can for example include KITTI, Waymo, Cityscapes, and BDD 100K. While resources (time, memory, power, etc.) are required to train the ML model in advance of use, at runtime it can typically be queried faster than the point-based prediction techniques described above can be applied. It can also be trained to take into account object type, leading to more accurate predictions. Given suitable training data, an ML model may be able to predict types of object motion which cannot be anticipated using point-based techniques. ML models can also be trained to take into account interactions between objects so that motion of one object can be predicted based on motion of one or more other objects. For example in the football match use case, if a ball is moving towards a goal, then a keeper can be expected to move to intercept it.

One challenge with the task of predicting future positions of objects is how to be sure that the object being tracked is the same throughout the entire image sequence. Where there is only a single object this is relatively straightforward, however for an image sequence comprising multiple overlapping objects this is more complex. If an ML model is used this can be manually handled through human verification and labelling of objects in the training dataset to ensure each object's movements are correctly isolated. Automated methods also exist for isolating objects. These can for example be based on comparison of objects between images in the sequence. Alternatively or additionally, automatic validation of object motion between images of the sequence can be performed, for example in a similar manner to the point-based object motion prediction described above (e.g., an object moving consistently along a straight line is unlikely to jump to a completely different point mid-sequence).

Instead of predicting motion of individual objects, a full frame prediction approach can be used. That is, the subsequent object data can be a sequence of one or more snapshots predicted based on an initial snapshot sequence in respect of the time period represented by the image sequence. The snapshots can for example be image frames, such that the initial snapshot sequence can be the image sequence itself (or a down-sampled version thereof, to reduce resource requirements). Alternatively or additionally, the initial snapshot sequence can be based on output data from a sensor such as a proximity detector trained on a field of view represented in the image sequence. Frame prediction tends to be less accurate than object motion prediction since the task is more complex. For the same reason, object motion prediction is generally more computationally lightweight. However, a significant advantage of frame prediction is that it takes into account complex interactions between objects. For example, in the football match use case described above, the model could recognise when the images show a referee giving a card for a foul, and predict likely team formation for an ensuing penalty or free kick.

The subsequent snapshot sequence can be predicted using a trained computer vision model. For example, a deep residual network, a recurrent neural network such as a long short-term memory (LSTM) network, an encoder-decoder neural network, or a generative adversarial network (GAN) could be used. The model can for example be trained on random sequences of videos to predict the next frames in the videos (which are known from the data). Through the training process the model learns the transformation from the previous frames to the next frames. In sequential models, e.g. recurrent neural networks, the previous frames can be passed through the model sequentially, predicting the next frames. In other model architectures these frames can be stacked to create a single input image consisting of several previous frames. The model is then trained to predict the next frame in the sequence, measuring the loss between the prediction and the true next frame, then updating itself (e.g. by adjusting weights) to reduce this loss. Once a sequence of one or more predicted frames has been generated, it can be appended to the existing sequence of frames (e.g. by adding both to a video buffer) for subsequent processing.

Regardless of the approach to prediction taken, it can be performed in an iterative manner to look further into the future. That is, in a second iteration the predictions made in a first iteration can be included in the initial object data, and so on.

According to another variation of the methods described herein, the overlay graphic placement location selection could make use of regions of the field of view in the image sequence which remain static throughout, and are thus likely to be 'background' suitable for the overlay graphic to be placed on. This approach may for example be particularly suitable when the image sequence is a drone video feed, since large portions of each image are likely to be empty sky and/or (depending on location) empty fields or bodies of water. One way to implement this approach is to obtain matrix representations F (of the same dimensions) of each of the sequence of images, then generate a matrix representation C of the image sequence as a whole by, for each matrix element (indexed by row index i and column index $j$), calculating a value representing a degree of variation in corresponding matrix elements over the sequence of matrices. The matrix representation of the image sequence can then be used in place of those described above generated via object/proximity detection, or combined with one or more of them, before the placement scores are calculated. The value representing the degree of variation can for example be based on a range, e.g. the matrix representation of the image sequence can be defined by:

$$C_{i,j} = \max_k \left( F_{i,j}^{(k)} \right) - \min_k \left( F_{i,j}^{(k)} \right)$$

where k is the matrix index in the sequence of matrices. Alternatively, the value representing the degree of variation can be based on a variance, e.g. the matrix representation of the image sequence can be defined by:

$$C_{i,j} = var_k \left( F_{i,j}^{(k)} \right)$$

Calculating the range generally requires fewer resources (time, power, memory, etc.) than calculating the variance, but the variance accounts for outliers better than the range.

Regardless of how the placement scores are generated, there are a variety of ways in which they can be used to select an appropriate overlay graphic placement location. As described above, if a stopping threshold is used then the candidate location corresponding to the first placement score found to exceed the threshold can be used. If the process to generate the placement scores completes without finding any which exceed the stopping threshold, then the candidate location corresponding to the best score can be selected. When the process to generate the placement scores has terminated (whether by completion, timing out, or otherwise) the best placement score can optionally be tested against a minimum acceptable placement score. If the best placement score exceeds the minimum acceptable placement score, then the location corresponding to the best placement score can be selected. If not, various policies could be implemented. For example, a decision can be made to omit the overlay graphic from the image sequence presented to the viewer. As another option, the overlay graphic could be modified (for example resized, e.g. uniformly shrunk) and the process to generate the placement scores repeated. Yet another option is to seek further information to base the location selection on. For example, an image sequence matrix used in the initial process to generate the placement scores could be a binary matrix indicating only the presence or absence of objects. If this does not result in any placement scores exceeding the minimum acceptable placement score, then the input data can be interrogated further to determine object types or specific objects as described above. The process to generate the placement scores can then be repeated using an image sequence matrix which indicates detected object types or specific objects using numbers which represent their salience (i.e. how essential it is to avoid occluding them with an overlay graphic).

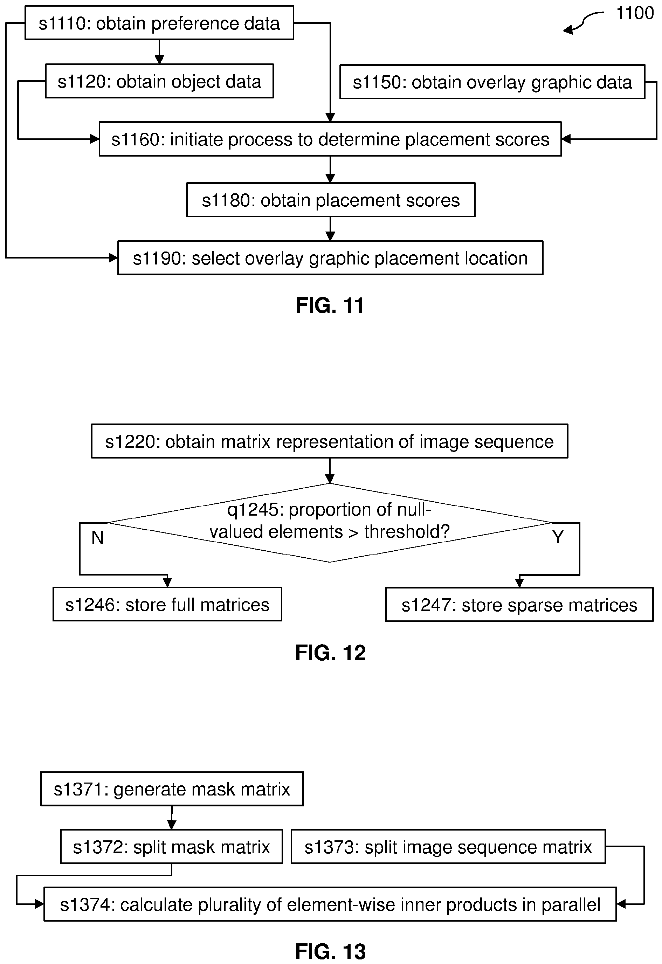

Figures 11 to 18 are flowcharts illustrating example methods incorporating the features described above.

Figure 11 illustrates an example computer-implemented method 1100 of selecting an overlay graphic placement location for display on a display device, such as may be used to perform step s120 of Figure 1. The method 1100 comprises obtaining object data at step s1120 and obtaining overlay graphic data at step s1150. Then these are both used at step s1160 to initiate a process to determine a placement score, based on the overlay graphic data and the object data, for each of a plurality of candidate graphic locations. One or more of those placement scores are obtained at step s1180, then the overlay graphic placement location is selected in dependence thereon at step s1190. This can involve selecting a location for an entirely predetermined overlay graphic to appear. Alternatively, it can comprise modifying the graphic in some way (e.g. resizing it) to enable it to appear in a selected location.

Preference data is optionally obtained at step s1110 and used in one or more of steps s1120, s1160, and s1190. For example, obtaining the object data at step s1120 can comprise generating the object data in dependence on overlay graphic placement location preference data obtained at step s1110. Alternatively or additionally, if a trial order for the plurality of candidate graphic locations is defined in the process initiated at step s1160 then it can be determined based on overlay graphic placement location preference data obtained at step s1110. Alternatively or additionally, output from the process to determine the placement scores obtained at step s1180 can be modified in dependence on overlay graphic placement location preference data obtained at step s1110.

Figure 12 illustrates some example sub-steps which can be comprised in step s1120 of Figure 11 to store the object data obtained therein. At step s1220 a matrix representation of the image sequence is obtained. At query q1245 it is determined whether a proportion of null-valued matrix elements in that matrix representation of the image sequence exceeds a threshold proportion. If not, the matrix representation of the image sequence, and a matrix representation of the overlay graphic obtained at step s1150, are stored as full matrices at step s1246. Alternatively, if the proportion of null-valued matrix elements does exceed the threshold proportion, the matrix representation of the image sequence, and the matrix representation of the overlay graphic obtained at step s1150, are stored as sparse matrices at step s1247.

Figure 13 illustrates some example sub-steps which can be comprised in the process initiated at step s1160, when the object data comprises an $m \times n$ matrix representation of the image sequence, the overlay graphic data comprises a matrix representation of the overlay graphic and the process to determine the placement scores is a process to convolve the matrix representation of the image sequence with the matrix representation of the overlay graphic. That process comprises the following steps for each possible position in which the matrix representation of the overlay graphic can be overlaid on the matrix representation of the image sequence. At step s1371 an $m \times n$ mask matrix is generated comprising the matrix representation of the overlay graphic in said position and null elements elsewhere. At step s1372 that mask matrix is split into a plurality of mask sub-matrices. At step s1373 the matrix representation of the image sequence is split into a corresponding plurality of image sub-matrices, each image sub-matrix being of identical dimension and position within the m $x$ $n$ matrix it is split from to its corresponding mask sub-matrix. Then, at step s1374, an element-wise inner product of each of the image sub-matrices with its corresponding mask sub-matrix is calculated. This is performed partly or fully in parallel for a plurality of the element-wise inner products; i.e. at least two of the element-wise inner products are calculated at least partly contemporaneously.

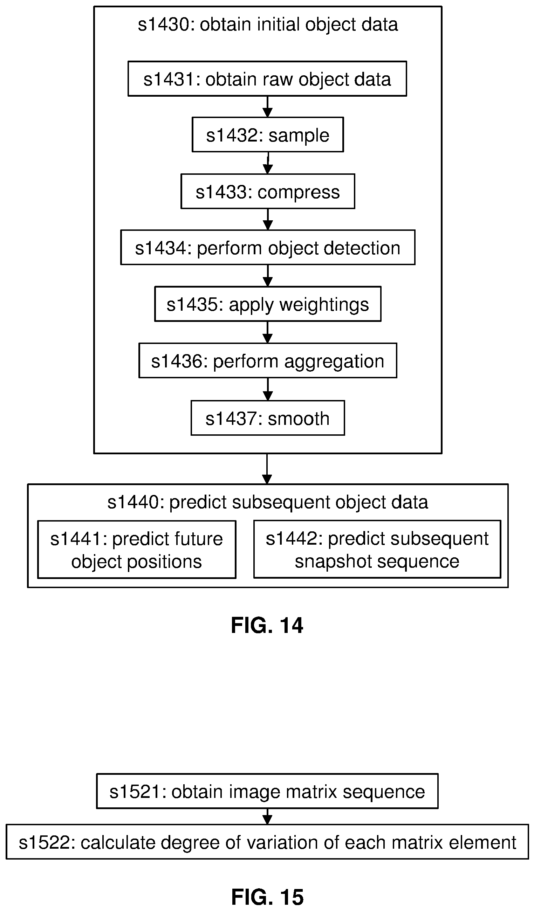

Figure 14 illustrates some example sub-steps which can be comprised in step s1120 of Figure 11 to obtain the object data. At step s1431 raw object data is obtained, for example originating from one or more sensors (e.g. a video clip and/or proximity sensor readings), or from another source such as a data processing device (e.g. an animation). (It is 'raw' in the sense that it has yet to undergo the processing described herein, though it may already have undergone some processing between its generation and when it is obtained at step s1431.) That raw object data can optionally be sampled at a predetermined rate at step s1432 to reduce the resources required to store and process it. Alternatively or additionally, compression can be applied at step s1433, e.g. to produce a lower resolution image sequence, again to reduce the resources required for subsequent storage and processing. Object detection can be performed at step s1434. Aggregation can be performed at step s1436. For example, the raw object data can be an $m \times n$ matrix snapshot representation of each of a sequence of two or more snapshots, each snapshot representing a different moment of the image sequence, and step s1436 can comprise performing a summation of all of those matrix snapshot representations. Before the aggregation is performed at step s1436, one or more weightings can optionally be applied at step s1435. For example, if object detection step s1434 has been performed, matrix elements at locations corresponding to detected object locations can be weighted in dependence on respective detected object types. Alternatively or additionally, a weight can be assigned to each of the matrix snapshot representations in dependence on: object detection relating to that matrix snapshot representation; and/or proximity estimation relating to that matrix snapshot representation; and/or a position of an image corresponding to that matrix snapshot representation in the image sequence. Smoothing can optionally be performed at step s1437. The smoothing can for example be performed using one or more of: rectangular bounding boxes, a Gaussian blur filter, a mean blur filter, and a weighted average blur filter. If aggregation step s1436 is performed, then the smoothing can be performed on the summation of all of the matrix snapshot representations.

If prediction is being employed, then steps s1431 to s1437 (where present) can be comprised in a step s1430 of obtaining initial object data. Then step s1440 can be performed to predict subsequent object data in dependence on the initial object data. This can for example comprise using a statistical model to predict one or more future object positions at step s1441 (in which case object detection step s1434 must be performed first). Alternatively, if the initial object data comprises an initial snapshot sequence in respect of a time period represented by the image sequence, then predicting the subsequent object data at step s1440 can comprise predicting a subsequent snapshot sequence of one or more subsequent snapshots in respect of a subsequent time period at step s1442.

The step sequence can be as shown in Figure 14, with the initial object data being fully processed in preparation for use in the process to determine the placement scores before the subsequent object data is predicted. Alternatively, the subsequent object data can be predicted earlier so that some of the processing can be performed on the initial and subsequent object data together. For example, step s1441 to predict the subsequent object data can be performed after (and based on) the object detection of step s1434, and steps s1435 to s1437 can then be performed on all of the initial and subsequent object data. As another example, step s1442 can be performed after compression step s1433, then steps s1434 to s1437 can be performed on an extended snapshot sequence comprising the subsequent snapshot sequence appended to the initial snapshot sequence.

Figure 15 illustrates some alternative example sub-steps which can be comprised in step s1120 of Figure 11 to obtain the object data. At step s1521 a sequence of $m \times n$ matrices, each respectively representing a corresponding image of the image sequence is obtained. Then at step s1522 an $m \times n$ matrix representation of the image sequence is obtained by, for each matrix element, calculating a value representing a degree of variation in corresponding matrix elements over the sequence of $m \times n$ matrices. If prediction is being used, then the image matrix sequence obtained at step s1521 can be an extended sequence of $m \times n$ matrices generated by appending one or more $m \times n$ matrices representing a predicted subsequent image sequence, each such matrix relating to a different point in time after conclusion of the image sequence, to one or more $m \times n$ matrices representing the image sequence, each such matrix relating to a different past point in time.

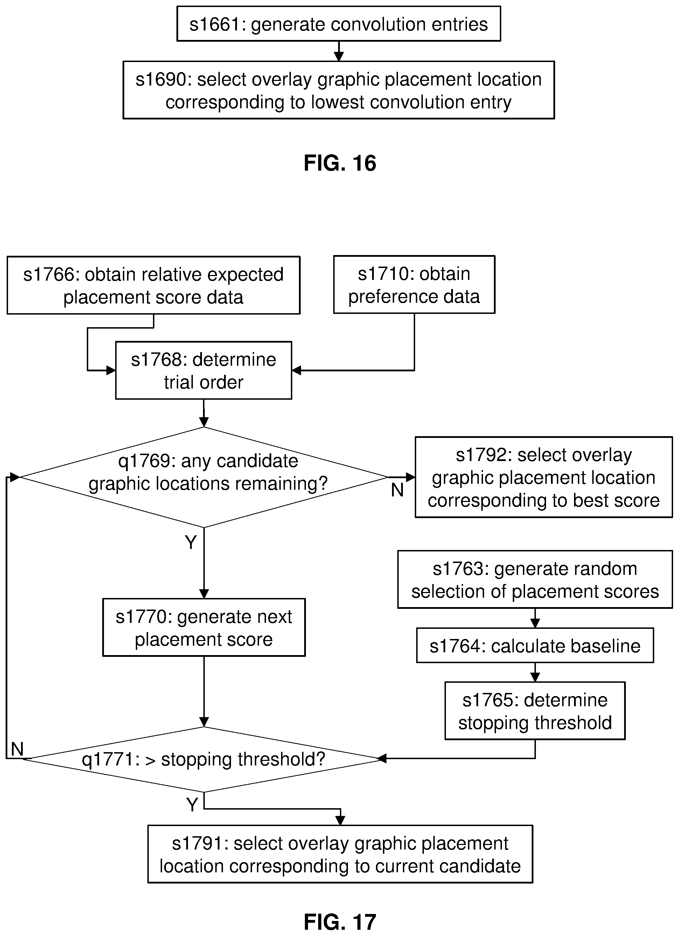

Figure 16 illustrates an example of how the process to determine the placement scores can be performed and used in the subsequent overlay graphic placement location selection step s1190 of Figure 11. The process to determine the placement scores initiated at step s1160 can comprise a process to convolve a matrix representation of the image sequence with a matrix representation of the overlay graphic. Step s1661 comprises accordingly generating a plurality of convolution entries. The overlay graphic placement location is then selected to correspond to the lowest of those convolution entries at step s1690.

Figure 17 illustrates an alternative example of how the process to determine the placement scores can be performed and used in the subsequent overlay graphic placement location selection step s1190 of Figure 11. According to this example, a trial order for the plurality of candidate graphic locations is determined at step s1768. The trial order can for example be determined based on data indicating relative expected placement scores of a plurality of the candidate graphic locations obtained at step s1766, such that the process proceeds from candidate graphic locations expected to have relatively high placement scores to candidate graphic locations expected to have relatively low placement scores. The determination of the trial order at step s1768 can alternatively/additionally be based on preference data obtained at step s1710. At query q1769 it is determined whether any candidate graphic locations remain to be trialled. If so, the next placement score is generated at step s1770. It is tested against a predetermined stopping threshold value at query q1771. If the placement score exceeds the stopping threshold value, then the overlay graphic location is selected to correspond to the current candidate graphic location at step s1791. If not, the flow returns to query q1769. If no candidate graphic locations remain, the overlay graphic placement location is selected to correspond to the best placement score at step s1792.

The stopping threshold value can optionally be determined according to steps s1763 to s1765. At step s1763 a substantially random selection of the placement scores is generated. A baseline value is then calculated in dependence on that selection of placement scores at step s1764. The stopping threshold value is then determined in dependence on that baseline value at step s1765.

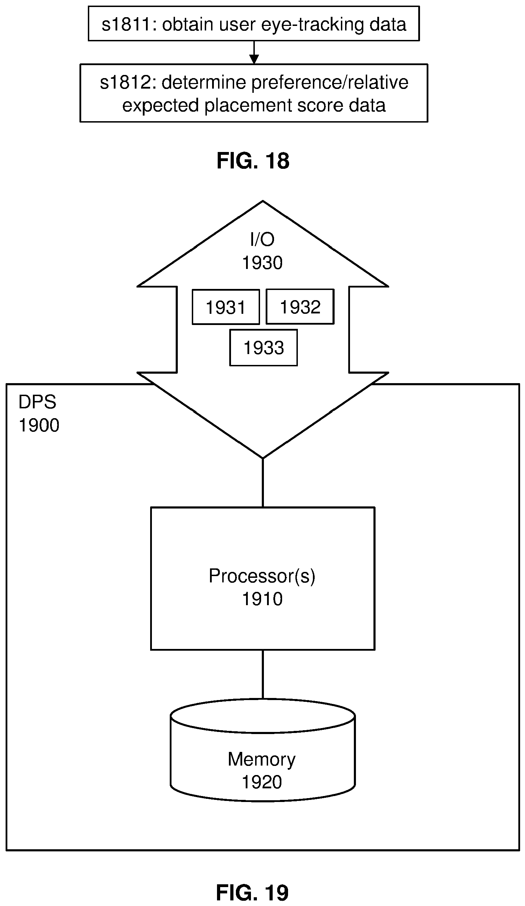

Figure 18 illustrates one way in which the preference data obtained at steps s1110 and s1710, and/or the relative expected placement score data obtained at step s1766, can be obtained. At step s1811 user eye-tracking data is obtained. Then, at step s1812 the overlay graphic placement location preference data and/or the relative expected placement score data is determined in dependence thereon.

Figure 19 schematically illustrates an example data processing system (DPS) 1900 capable of performing any of the methods described above. It comprises one or more processors 1910 operably coupled to both a memory 1920 and an interface (I/O) 1930.

The memory 1920 can optionally comprise computer program instructions which, when the program is executed by the processor(s) 1910, cause the data processing system 1900 to carry out any of the methods described above. Alternatively or additionally, the interface 1930 can optionally comprise one or both of a physical interface 1931 configured to receive a data carrier having such instructions stored thereon, and a receiver 1932 configured to receive a data carrier signal carrying such instructions.

The receiver 1932, when present, can be configured to receive messages. It can comprise one or more wireless receiver modules and/or one or more wired receiver modules. The interface 1930 can optionally comprise a transmitter 1933 configured to transmit messages. The transmitter 1933, when present, can comprise one or more wireless transmitter modules and/or one or more wired transmitter modules.

### INTERPRETATION NOTES

The preceding description is presented to enable any person skilled in the art to make and use the system and/or perform the method of the invention, and is provided in the context of a particular application. Various modifications to the disclosed examples will be readily apparent to those skilled in the art. It is intended that the specification be considered as exemplary only.

The phrase "consisting of" is intended to mean "including only". The word "comprising" is intended to mean "including at least", and therefore includes, in a limiting case, "consisting of".

The terms "top", "bottom", "side", "front", "back", "forward", "rear", "clockwise", "anticlockwise" and other terms describing the orientation of features are not intended to be limiting and, where used, are purely included in order to facilitate the description of the relative location of these features in the context of the accompanying drawings. In use, or during storage, the features may be disposed in other orientations.

Where this application lists one or more method steps, the presence of precursor, follow-on and intervening method steps is not excluded unless such exclusion is explicitly indicated. Similarly, where this application lists one or more components of a device or system, the presence of additional components, whether separate or intervening, is not excluded unless such exclusion is explicitly indicated.

In addition, where this application has listed the steps of a method or procedure in a specific order, it could be possible, or even expedient in certain circumstances, to change the order in which some steps are performed, and it is intended that the particular steps of the method or procedure claims set forth herein not be construed as being order-specific unless such order specificity is expressly stated in the claim. That is, the operations/steps may be performed in any order, unless otherwise specified, and embodiments may include additional or fewer operations/steps than those disclosed herein. It is further contemplated that executing or performing a particular operation/step before, partially or entirely contemporaneously with, or after another operation is in accordance with the described embodiments.

The scope of the present invention includes any novel features or combination of features disclosed herein. The applicant hereby gives notice that new claims may be formulated to such features or combination of features during prosecution of this application or of any further applications derived therefrom. In particular, with reference to the appended claims, features from dependent claims may be combined with those of the independent claims and features from respective independent claims may be combined in any appropriate manner and not merely in the specific combinations enumerated in the claims.

Insofar as embodiments of the invention described are implementable, at least in part, using a software-controlled programmable processing device, such as a microprocessor, digital signal processor or other processing device, data processing apparatus or system, it will be appreciated that a computer program for configuring a programmable device, apparatus or system to implement the foregoing described methods is envisaged as an aspect of the present invention. Such a computer program may be embodied as source code or undergo compilation for implementation on a processing device, apparatus or system or may be embodied as object code, for example.

Such a computer program may be encoded as executable instructions embodied in a carrier medium, non-transitory computer-readable storage device and/or a memory device in machine or device readable form, for example in volatile memory, non-volatile memory, solid-state memory, magnetic memory such as disk or tape, optically or magneto-optically readable memory such as magnetic tape, compact disk (CD), digital versatile disk (DVD) or other media that are capable of storing code and/or data. Such a computer program may alternatively or additionally be supplied from a remote source embodied in a communications medium such as an electronic signal, radio frequency carrier wave or optical carrier wave. Such carrier media are also envisaged as aspects of the present invention.

Such instructions, when executed by a processor (or one or more computers, processors, and/or other devices) may cause the processor (the one or more computers, processors, and/or other devices) to perform at least a portion of the methods described herein.

Where a processor is referred to herein, this is to be understood to refer to a single processor or multiple processors operably connected to one another. Similarly, where a memory is referred to herein, this is to be understood to refer to a single memory or multiple memories operably connected to one another.

The methods and processes can also be partially or fully embodied in hardware modules or apparatuses or firmware, so that when the hardware modules or apparatuses are activated, they perform the associated methods and processes. The methods and processes can be embodied using a combination of code, data, and hardware modules or apparatuses.

Examples of processing systems, environments, and/or configurations that may be suitable for use with the embodiments described herein include, but are not limited to, embedded computer devices, personal computers, server computers (specific or cloud (virtual) servers), hand-held or laptop devices, multiprocessor systems, microprocessor-based systems, set top boxes, programmable consumer electronics, mobile telephones, smartphones, tablets, network personal computers (PCs), minicomputers, mainframe computers, distributed computing environments that include any of the above systems or devices, and the like. Hardware modules or apparatuses described in this disclosure include, but are not limited to, application-specific integrated circuits (ASICs), field-programmable gate arrays (FPGAs), dedicated or shared processors, and/or other hardware modules or apparatuses.

User devices can include, without limitation, static user devices such as PCs and mobile user devices such as smartphones, tablets, laptops and smartwatches.

Receivers and transmitters as described herein may be standalone or may be comprised in transceivers. A communication link as described herein comprises at least one transmitter capable of transmitting data to at least one receiver over one or more wired or wireless communication channels. Wired communication channels can be arranged for electrical or optical transmission. Such a communication link can optionally further comprise one or more relaying transceivers.

User input devices can include, without limitation: microphones, buttons, keypads, touchscreens, touchpads, trackballs, joysticks, mice, gesture control devices and brain control (e.g. electroencephalography, EEG) devices. User output devices can include, without limitation: speakers, buzzers, display screens, projectors, indicator lights, haptic feedback devices and refreshable braille displays. User interface devices can comprise one or more user input devices, one or more user output devices, or both.

**Claims**

1.  A computer-implemented method of selecting an overlay graphic placement location for display of an overlay graphic on a display device over an image sequence originating from a camera, the method comprising:

    obtaining overlay graphic data;
    obtaining object data indicating proximity of any objects in the image sequence to the camera at the time the image sequence was recorded;
    initiating a process to determine a placement score, based on the overlay graphic data and the object data, for each of a plurality of candidate graphic locations, the placement scores being determined in dependence on proximity data derived from the object data; and
    selecting the overlay graphic placement location in dependence on the placement scores.

2.  The computer-implemented method of claim 1, further comprising:

    obtaining data indicating relative expected placement scores of a plurality of the candidate graphic locations; and
    determining a trial order for the plurality of candidate graphic locations in dependence thereon, such that the process to determine the placement scores proceeds from candidate graphic locations expected to have relatively high placement scores to candidate graphic locations expected to have relatively low placement scores;

    wherein the process is terminated when a placement score above a predetermined stopping threshold value is found.

3.  The computer-implemented method of either of claims 1 or 2, wherein:

    the object data comprises an $m \times n$ matrix representation of the image sequence; and
    the overlay graphic data comprises a $q \times r$ matrix representation of the overlay graphic, wherein $q \le m$, $r \le n$, and $q.r < m.n$;

    wherein the process to determine the placement scores is a process to convolve the matrix representation of the image sequence with the matrix representation of the overlay graphic.

4.  The computer-implemented method of claim 3, wherein the process to convolve the matrix representation of the image sequence with the matrix representation of the overlay graphic comprises, for each of a plurality of candidate positions in which the matrix representation of the overlay graphic can be overlaid on the matrix representation of the image sequence:

    generating an $m \times n$ mask matrix comprising the matrix representation of the overlay graphic in said position and null elements elsewhere;
    splitting the matrix representation of the image sequence into a plurality of image sub-matrices;
    splitting the $m \times n$ mask matrix into a corresponding plurality of mask sub-matrices, each mask sub-matrix being of identical dimension and position within the $m \times n$ matrix it is split from to its corresponding image sub-matrix; and
    calculating an element-wise inner product of each of the image sub-matrices with its corresponding mask sub-matrix, wherein at least two of those element-wise inner products are calculated at least partly contemporaneously.

5.  The computer-implemented method of any preceding claim, further comprising:

    obtaining user eye-tracking data; and
    selecting the overlay graphic placement location in dependence thereon.

6.  The computer-implemented method of any preceding claim, further comprising:

    predicting subsequent object data in dependence on initial object data obtained in respect of a time period represented by the image sequence;
    wherein the process to determine the placement scores is based on object data obtained in dependence on both the initial object data and the subsequent object data.

7. The computer-implemented method of any preceding claim, wherein the image sequence is a sequence of a plurality of images and obtaining the object data comprises:

   obtaining a sequence of $m \times n$ matrices, each respectively representing a corresponding one of the sequence of the plurality of images; and
   generating an $m \times n$ matrix representation of the image sequence by, for each matrix element, calculating a value representing a degree of variation in corresponding matrix elements over the sequence of $m \times n$ matrices.

8. The computer-implemented method of any preceding claim, wherein obtaining the object data comprises:

   obtaining a matrix representation of the image sequence;
   determining a proportion of null-valued matrix elements in that matrix representation of the image sequence; and
   when that proportion exceeds a threshold proportion, storing the matrix representation of the image sequence and a matrix representation of the overlay graphic as sparse matrices;
   otherwise storing the matrix representation of the image sequence and the matrix representation of the overlay graphic as full matrices.

9. The computer-implemented method of any preceding claim, wherein obtaining the object data comprises:

   obtaining a plurality of matrix image representations of the image sequence, each such matrix image representation relating to a different point in time; and
   performing a weighted summation of all of those matrix image representations, wherein a weight is assigned to each of the matrix image representations in dependence on proximity data related thereto.

10. The computer-implemented method of any preceding claim, wherein the overlay graphic is configured for application to a live video feed.

11. The computer-implemented method of claim 10, wherein:

    obtaining the object data comprises obtaining the image sequence from one or more cameras moving in synchrony with or trained on a mobile apparatus; and
    the overlay graphic is configured for display to a user during that user's control of the mobile apparatus.

12. A data processing system configured to perform the method of any preceding claim.

13. A computer program comprising instructions which, when the program is executed by a computer, cause the computer to carry out the method of any of claims 1 to 11.

14. A computer-readable data carrier having stored thereon the computer program of claim 13.

15. A data carrier signal carrying the computer program of claim 13.

FIG. 1

200

FIG. 2

$$\begin{bmatrix} a_{0,0} & \cdots & a_{0,n} \\ \vdots & \ddots & \vdots \\ a_{m,0} & \cdots & a_{m,n} \end{bmatrix} + \begin{bmatrix} b_{0,0} & \cdots & b_{0,n} \\ \vdots & \ddots & \vdots \\ b_{m,0} & \cdots & b_{m,n} \end{bmatrix} + \begin{bmatrix} c_{0,0} & \cdots & c_{0,n} \\ \vdots & \ddots & \vdots \\ c_{m,0} & \cdots & c_{m,n} \end{bmatrix} + \cdots$$

$$= \begin{bmatrix} a_{0,0} + b_{0,0} + c_{0,0} + \cdots & \cdots & a_{0,n} + b_{0,n} + c_{0,n} + \cdots \\ \vdots & \ddots & \vdots \\ a_{m,0} + b_{m,0} + c_{m,0} + \cdots & \cdots & a_{m,n} + b_{m,n} + c_{m,n} + \cdots \end{bmatrix}$$

FIG. 3

410                                    420

**FIG. 4**

510a          520a          530a          540a

**FIG. 5A**

510b          520b          530b          540b

**FIG. 5B**

600a

600b

600c

**FIG. 6**

**FIG. 7**

FIG. 8

**FIG. 9**

**FIG. 10**

EP 4 625 331 A1

s1110: obtain preference data

s1120: obtain object data

s1150: obtain overlay graphic data

1100

s1160: initiate process to determine placement scores

s1180: obtain placement scores

s1190: select overlay graphic placement location

**FIG. 11**

s1220: obtain matrix representation of image sequence

q1245: proportion of null-valued elements > threshold?

N

Y

s1246: store full matrices

s1247: store sparse matrices

**FIG. 12**

s1371: generate mask matrix

s1372: split mask matrix

s1373: split image sequence matrix

s1374: calculate plurality of element-wise inner products in parallel

**FIG. 13**

s1430: obtain initial object data

s1431: obtain raw object data

s1432: sample

s1433: compress

s1434: perform object detection

s1435: apply weightings

s1436: perform aggregation

s1437: smooth

s1440: predict subsequent object data

s1441: predict future object positions

s1442: predict subsequent snapshot sequence

**FIG. 14**

s1521: obtain image matrix sequence

s1522: calculate degree of variation of each matrix element

**FIG. 15**

s1661: generate convolution entries

s1690: select overlay graphic placement location corresponding to lowest convolution entry

**FIG. 16**

s1766: obtain relative expected placement score data

s1710: obtain preference data

s1768: determine trial order

q1769: any candidate graphic locations remaining?

s1792: select overlay graphic placement location corresponding to best score

N

Y

s1770: generate next placement score

s1763: generate random selection of placement scores

s1764: calculate baseline

s1765: determine stopping threshold

N

q1771: > stopping threshold?

Y

s1791: select overlay graphic placement location corresponding to current candidate

**FIG. 17**

s1811: obtain user eye-tracking data

s1812: determine preference/relative expected placement score data

**FIG. 18**

I/O
1930

1931 | 1932

1933

DPS
1900

Processor(s)
1910

Memory
1920

**FIG. 19**

**EUROPEAN SEARCH REPORT**

Application Number

EP 24 16 6682

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/103381 A1 (BASTIDE PAUL R [US] ET AL) 8 April 2021 (2021-04-08) * paragraph [0017] - paragraph [0080]; figures 1-6 * | 1-15 | INV. G06T11/60 |
| | - - - - - | | |
| A | US 2021/056320 A1 (RASMUSSON ROBERT EARL [US] ET AL) 25 February 2021 (2021-02-25) * paragraph [0009] - paragraph [0064]; figures 1-6 * | 1-15 | |
| | - - - - - | | |

TECHNICAL FIELDS
SEARCHED      (IPC)

G06T

The present search report has been drawn up for all claims

| Place of search | Date of completion of the search | Examiner |
|---|---|---|
| The Hague | 30 August 2024 | Thibault, Guillaume |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 16 6682

This annex lists the patent family members relating to the patent documents cited in the above-mentioned European search report.
The members are as contained in the European Patent Office EDP file on
The European Patent Office is in no way liable for these particulars which are merely given for the purpose of information.

30-08-2024

| Patent document cited in search report | Publication date | Patent family member(s) | Publication date |
|---|---|---|---|
| US 2021103381 A1 | 08-04-2021 | US 2019346994 A1 | 14-11-2019 |
| | | US 2021103381 A1 | 08-04-2021 |
| US 2021056320 A1 | 25-02-2021 | US 2018136000 A1 | 17-05-2018 |
| | | US 2018136656 A1 | 17-05-2018 |
| | | US 2018137373 A1 | 17-05-2018 |
| | | US 2021056320 A1 | 25-02-2021 |
| | | US 2021326602 A1 | 21-10-2021 |
| | | US 2022004779 A1 | 06-01-2022 |
| | | US 2024077327 A1 | 07-03-2024 |
| | | US 2024125612 A1 | 18-04-2024 |

EPO FORM P0459

For more details about this annex : see Official Journal of the European Patent Office, No. 12/82